# DEMANDE DE BREVET EUROPEEN

(11) **EP 1 452 423 A1**
(43) Date de publication de la demande: **01.09.2004**
(21) Numéro de dépôt: 04290515.8
(22) Date de dépôt: 25.02.2004
(51) Int. Cl.: B62D 25/08, B60K 11/04, B62D 29/00

(54) **Structure de la partie avant d'un véhicule automobile comportant un échangeur air-air**

(30) Priorité: 26.02.2003 FR 0302356
(71) Demandeur: Renault s.a.s., 92100 Boulogne Billancourt (FR)
(72) Inventeur: Ducher, Joel, 78120 Rambouillet (FR)

(57) **Abrégé**

Structure de la partie avant d'un véhicule automobile, comprenant derrière le bouclier ou pare-chocs avant et devant le radiateur de refroidissement (1 ) du moteur, une traverse supérieure (2) et une traverse inférieure (3) reliées au berceau avant (4) de la carrosserie du véhicule, un échangeur air - air (7) pour refroidir l'air comprimé par un turbocompresseur avant l'admission de cet air dans le moteur, caractérisée en ce que les deux traverses (2, 3) sont conformées en corps creux pour constituer deux boites à air dudit échangeur air - air et sont reliées entre elles par un faisceau d'ailettes de refroidissement (7) pour constituer ledit échangeur air - air en combinaison avec les deux boites à air.

## Description

La présente invention concerne la structure de la partie avant d'un véhicule automobile.

Les figures 1, 2 et 3 représentent la structure actuelle de la partie avant d'un véhicule automobile à moteur diesel suralimenté et équipé d'un climatiseur.
La figure 1 est une vue de côté de la structure,
La figure 2 est une vue de devant et,
La figure 3 est une vue de dessus.

Cette structure comprend derrière le bouclier ou pare-chocs (non représenté) avant et devant le radiateur 1 de refroidissement du moteur, une traverse supérieure 2 et une traverse inférieure 3 reliées au berceau avant 4 de la carrosserie du véhicule.

La traverse supérieure 2 sert à absorber les chocs frontaux du véhicule. La traverse inférieure 3 existe déjà dans certains véhicules et permet d'améliorer les résultats concernant les chocs piétons.

Devant le radiateur 1 est situé un échangeur air - air 5 pour refroidir l'air comprimé par un turbocompresseur avant l'admission de cet air dans le moteur.

Entre l'échangeur air - air 5 et le radiateur 1 est placé le condenseur 6 du système de climatisation.

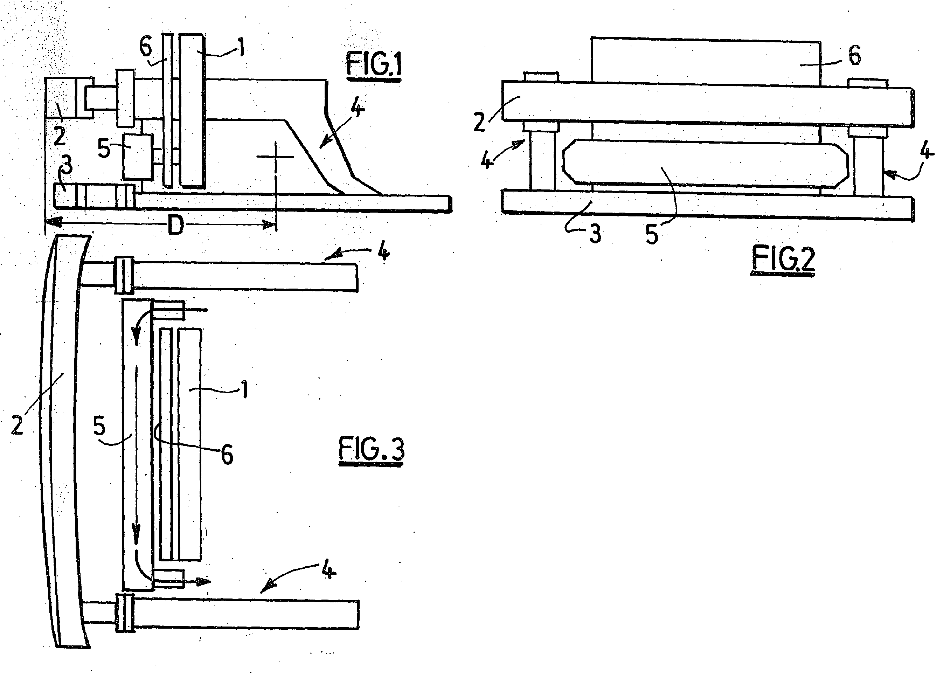

L'empilement de l'échangeur air - air 5 et du condenseur 6 devant le radiateur 1 a pour conséquence que le porte à faux avant D (voir figure 1) est relativement important.

Ce porte à faux important permet au véhicule d'avoir un bon classement au test du mur Danner.

Ce test consiste à faire percuter le véhicule à une vitesse de 15 km/h contre un mur. Le résultat du test est bon, lorsque le radiateur de refroidissement 1 n'a pas été endommagé, de sorte que seuls doivent être remplacés après le choc, les éléments situés devant le radiateur 1.

Le but de la présente invention est de réduire le porte à faux précité de la structure avant d'un véhicule automobile tout en permettant d'obtenir un bon classement au test du mur Danner.

Suivant l'invention, la structure de la partie avant d'un véhicule automobile, comprenant derrière le bouclier ou pare-chocs avant et devant le radiateur de refroidissement du moteur, une traverse supérieure et une traverse inférieure reliées au berceau avant de la carrosserie du véhicule, un échangeur air - air pour refroidir l'air comprimé par un turbocompresseur avant l'admission de cet air dans le moteur est caractérisée en ce que les deux traverses sont conformées en corps creux pour constituer deux boites à air dudit échangeur air - air et sont reliées entre elles par un faisceau d'ailettes de refroidissement pour constituer ledit échangeur air - air en combinaison avec les deux boites à air.

Ainsi l'échangeur air - air et les deux traverses sont intégrés en un seul élément qui sera nécessairement détruit lors du test du mur Danner.

Cette disposition permet de réduire le porte à faux avant, car l'échangeur n'est plus dans l'empilage des éléments précités.

De préférence, les deux traverses sont en aluminium ou alliage d'aluminium, ce qui permet d'obtenir une réduction de la masse tout en favorisant les échanges thermiques entre l'air extérieur et l'air à refroidir.

Grâce à l'intégration de l'échangeur air - air avec les traverses avant, cet échangeur peut être relativement espacé du condenseur de climatisation qui est placé devant le radiateur. Cette disposition favorise le refroidissement du condenseur.

D'autres particularités et avantages de l'invention apparaîtront encore dans la description ci-après.

Aux dessins annexés donnés à titre d'exemples non limitatifs :

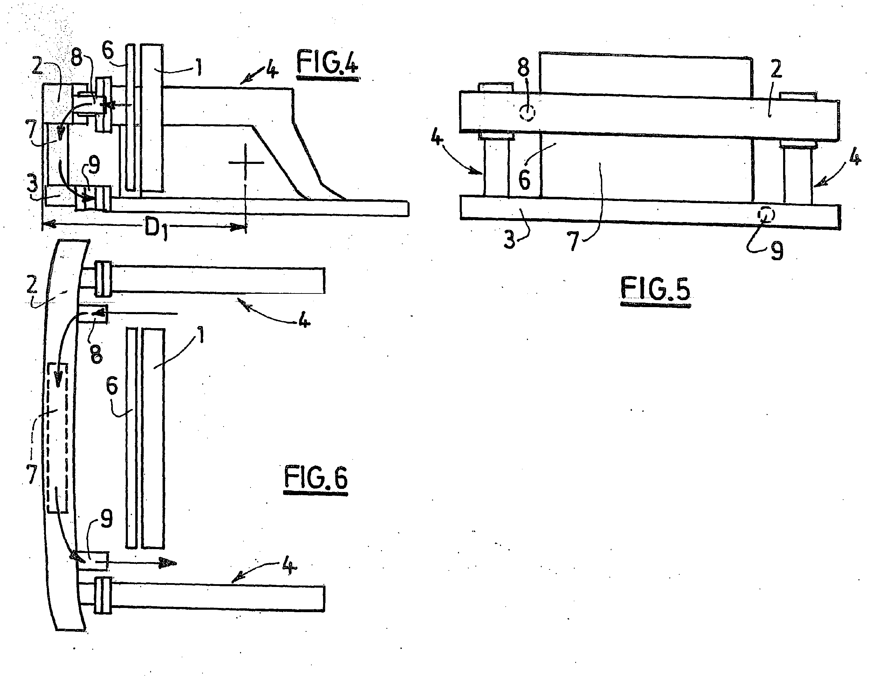

- la figure 4 est une vue dé côté de la structure avant, améliorée selon l'invention, d'un véhicule automobile,
- la figure 5 est une vue montrant le devant de cette structure améliorée,
- la figure 6 est une vue en plan de dessus de cette structure améliorée.

Dans la réalisation représentée sur les figures 4, 5 et 6, la structure de la partie avant d'un véhicule automobile comprend comme dans le cas des figures 1 à 3, derrière le bouclier ou pare-chocs avant et devant le radiateur de refroidissement 1 du moteur et le condenseur 6, une traverse supérieure 2 et une traverse inférieure 3 reliées au berceau avant 4 de la carrosserie du véhicule.

Conformément à l'invention, les deux traverses 2, 3 sont conformées en corps creux pour constituer deux boîtes à air dudit échangeur air - air et sont reliées entre elles par un faisceau d'ailettes de refroidissement 7 pour constituer ledit échangeur air - air en combinaison avec les deux boîtes à air.

Les deux traverses 2, 3 sont réalisées en aluminium ou alliage d'aluminium et ont une section carrée ou rectangulaire. Ces traverses 2, 3 peuvent également être tubulaires.

Les figures 4 à 6 montrent que la traverse supérieure 2 comporte près de l'une de ses extrémités une entrée d'air 8 reliée à la sortie du compresseur du turbo compresseur et la traverse inférieure 3 comporte près de l'une de ses extrémités une sortie d'air 9 reliée à l'admission du moteur. La circulation de l'air pourrait également être inversée, c'est-à-dire que l'entrée de l'air pourrait se situer dans la traverse inférieure 3 et la sortie de l'air à la traverse supérieure 2.

Le faisceau d'ailettes 7 peut être directement soudé aux deux traverses 2, 3.

Les figures 4 et 6 montrent que le condenseur 6 est espacé de l'échangeur air - air 7, d'une distance qui est plus importante que dans le cas de la structure actuelle représentée sur les figures 1 à 3.

En comparant les figures 4 et 1, on constate que l'intégration de l'échangeur air-air avec les deux traverses 2, 3 a permis de réduire le porte à faux D1. Cette réduction est de l'ordre de 65 mm.

L'amélioration selon l'invention permet également de rapprocher le radiateur 1 et le condenseur 6 de l'avant du véhicule, ce qui permet d'augmenter le volume du compartiment moteur.

Par ailleurs, grâce à l'amélioration selon l'invention, le faisceau 7 de l'échangeur air - air est éloigné du condenseur 6, ce qui permet d'améliorer l'arrosage aéraulique de ce dernier, c'est-à-dire son refroidissement.

De plus, on obtient grâce à l'invention, un bon classement du véhicule au test du mur de Danner, malgré la réduction du porte à faux, ce qui n'était pas possible jusqu'à présent dans les véhicules à moteur Diesel suralimenté.

## Revendications

1. Structure de la partie avant d'un véhicule automobile, comprenant derrière le bouclier ou pare-chocs avant et devant le radiateur de refroidissement (1) du moteur, une traverse supérieure (2) et une traverse inférieure (3) reliées au berceau avant (4) de la carrosserie du véhicule, un échangeur air - air (7) pour refroidir l'air comprimé par un turbocompresseur avant l'admission de cet air dans le moteur, **caractérisée en ce que** les deux traverses (2, 3) sont conformées en corps creux pour constituer deux boites à air dudit échangeur air - air et sont reliées entre elles par un faisceau d'ailettes de refroidissement (7) pour constituer ledit échangeur air - air en combinaison avec les deux boites à air.

2. Structure selon la revendication 1, **caractérisée en ce que** les deux traverses (2, 3) sont en aluminium ou alliage d'aluminium.

3. Structure selon l'une des revendications 1 ou 2, **caractérisée en ce que** les deux traverses (2, 3) sont tubulaires.

4. Structure selon la revendication 3, **caractérisée en ce que** les traverses (2, 3) ont une section carrée ou rectangulaire.

5. Structure selon l'une des revendications 1 à 4, **caractérisée en ce que** la traverse supérieure (2) comporte près de l'une de ses extrémités une entrée d'air (8) reliée à la sortie du compresseur du turbocompresseur et **en ce que** la traverse inférieure (3) comporte près de l'une de ses extrémités une sortie d'air (9) reliée à l'admission du moteur.

6. Structure selon l'une des revendications 1 à 5, **caractérisée en ce que** le faisceau d'ailettes (7) est directement soudé aux deux traverses (2, 3).

7. Structure selon l'une des revendications 1 à 6, **caractérisée en ce que** qu'un condenseur de climatisation (6) est placé entre le radiateur (1) et ledit échangeur air - air (7).

8. Structure selon l'une des revendications 1 à 7, **caractérisée en ce que** ledit condenseur (6) est espacé dudit échangeur air - air (7).
